# EUROPEAN PATENT SPECIFICATION

(11) **EP 3 612 761 B1**
(45) Date of publication and mention of the grant of the patent: **13.12.2023**
(21) Application number: 18787932.5
(22) Date of filing: 06.04.2018
(51) Int. Cl.: F16L 21/08, F16L 37/02, F16L 37/08, F16L 37/091

(54) **COUPLER**
KOPPLER
ÉLÉMENT D'ACCOUPLEMENT

(30) Priority: 18.04.2017 US 201715490691; 15.08.2017 US 201715678015
(43) Date of publication of application: 26.02.2020
(73) Proprietor: Cobalt Coupler Systems, LLC, Fort Collins, CO 80524 (US)
(72) Inventor: JACOBS, Jon Joseph, Fort Collins, CO 80524 (US); JACOBS, Lonnie Joseph, Fort Collins, CO 80526 (US); NOYER, Robert Wayne, Carr, CO 80612 (US); SEATON, Lioyd Dale, Windsor, CO 80550 (US)
(74) Representative: Kador & Partner Part mbB
(86) International application number: PCT/US2018/026587
(87) International publication number: WO 2018/194871

(56) References cited:
- EP-A2- 2 677 225
- DE-A1- 2 609 576
- FR-A1- 2 747 453
- FR-A1- 2 777 341
- FR-A1- 3 001 023
- GB-A- 1 372 241
- US-A- 1 949 451
- US-A- 5 553 895
- US-A- 5 769 460
- US-A1- 2004 239 115
- US-A1- 2010 194 098

## Description

This International Patent Cooperation Treaty Patent Application is a continuation of United States Non-Provisional Patent Application No. 15/678,015, filed August 15, 2017, which is a continuation-in-part of United States Patent Application No. 15/490,691, filed April 18, 2017.

### I. FIELD OF THE INVENTION

A coupler including a tubular conduit having a length disposed between a first end and a second end, having a thickness disposed between an external surface and internal surface defining an interior passage, and including one or more of an external annular groove disposed in the external surface overlaying an internal annular member disposed on the internal surface, and one or more external annular members disposed on the external surface correspondingly overlaying one or more internal annular grooves disposed in the internal surface.

Such couplers are known from FR2777341A1, EP2677225A2, US2004/239115, FR3001023A1, FR2747453A1 or DE2609576A1.

### II. DISCLOSURE OF THE INVENTION

The inventions provides a coupler comprising a tubular conduit having a length disposed between a conduit first end and a conduit second end and a conduit wall having a thickness disposed between an external surface and an internal surface, said internal surface defining an interior passage between said conduit first end and said conduit second end; and a tubular guide coupled to said conduit first end, said tubular guide continuously widening between said conduit first end and a tubular guide terminal end, said tubular guide including: a first tubular guide first region directly connected to said conduit first end; a first tubular guide second region directly connected to said first tubular guide first region and extending to said tubular guide terminal end; said first tubular guide first region having a first radius of curvature along a longitudinal axis of said tubular guide; said first tubular guide second region having a second radius of curvature along said longitudinal axis of said tubular guide, said second radius of curvature less than said first radius of curvature, said first radius of curvature and said second radius of curvature outwardly curving from said interior passage.
Further embodiments are disclosed in the dependent claims.

Further disclosed but not within the scope of the claims is a method of using a coupler including positioning a coupler in spatial relation to a pipe first end, the coupler including one or more of: a tubular conduit having a length disposed between a tubular conduit first end and a tubular conduit second end, a conduit wall having a thickness disposed between an external surface and an internal surface defining an interior passage, and a tubular guide coupled to the tubular conduit first end widening between the tubular conduit first end and a tubular guide terminal end, and engaging a pipe first end to the tubular guide proximate the tubular guide terminal end, forcibly urging the pipe first end along the tubular guide, and guiding the pipe first end into the interior passage of the tubular conduit.

Naturally, further objects of the invention are disclosed throughout other areas of the specification, drawings, photographs, and claims.

### III. BRIEF DESCRIPTION OF THE DRAWINGS

Figure 1 is a perspective view of a particular embodiment of a coupler.
Figure 2 is a side view of a particular embodiment of a coupler.
Figure 3A is a cross sectional view 3A-3A of the particular embodiment of the coupler shown in Figure 1.
Figure 3B is an enlarged portion of the cross sectional view 3A-3A.
Figure 3C is another enlarged portion of the cross sectional view 3A-3A.
Figure 4 is a first end view of a particular embodiment of a coupler.
Figure 5 is a second end view of a particular embodiment of a coupler.
Figure 6 is a perspective of another particular embodiment of a coupler.
Figure 7 is a side view of another particular embodiment of a coupler.
Figure 8A is a cross sectional view 8A-8A of the particular embodiment of the coupler shown in Figure 6.
Figure 8B is an enlarged portion of the cross sectional view 8A-8A.
Figure 8C is another enlarged portion of the cross sectional view 8A-8A.
Figure 8D is another enlarged portion of the cross sectional view 8A-8A.
Figure 9 is a first end view of another particular embodiment of a coupler.
Figure 10 is a second view of another particular embodiment of a coupler.
Figure 11 is a perspective view of a particular embodiment of a coupler having a tubular guide.
Figure 12 is a side view of a particular embodiment of a coupler having a tubular guide.
Figure 13A is a cross sectional view 13A-13A of the particular embodiment of the coupler shown in Figure 11.
Figure 13B is an enlarged portion of the cross sectional view 13A-13A.
Figure 13C is another enlarged portion of the cross sectional view 13A-13A.
Figure 14 is a first end view of a particular embodiment of a coupler having a tubular guide.
Figure 15 is a second end view of a particular embodiment of a coupler having a tubular guide.
Figure 16 is a perspective of another particular embodiment of a coupler having a tubular guide.
Figure 17 is a side view of another particular embodiment of a coupler having a tubular guide.
Figure 18A is a cross sectional view 18A-18A of the particular embodiment of the coupler shown in Figure 16.
Figure 18B is an enlarged portion of the cross sectional view 18A-18A.
Figure 18C is an enlarged portion of the cross sectional view 18A-18A.
Figure 18D is an enlarged portion of the cross sectional view 18A-18A.
Figure 19 is a first end view of another particular embodiment of a coupler having a tubular guide.
Figure 20 is a second end view of another particular embodiment of a coupler having a tubular guide.
Figure 21 is a perspective cross sectional view 21-21 of the particular embodiment of the coupler shown in Figure 1 further including a seal element and an annular retaining member.
Figure 22 is a perspective cross sectional view 22-22 of another particular embodiment of a coupler shown in Figure 7 further including a seal element and an annular retaining member at each of the first end and the second end of the tubular conduit.
Figure 23 is a perspective cross sectional view 23-23 of the particular embodiment of the coupler shown in Figure 11 further including a seal element and an annular retaining member.
Figure 24 is a perspective cross sectional view 24-24 of the particular embodiment of a coupler shown in Figure 17 further including a seal element and an annular retaining member at each of the first end and the second end of the tubular conduit.
Figure 25 illustrates a method of using a particular embodiment of a coupler in which a first pipe first end engages a coupler and a second pipe first end engages a coupler.
Figure 26 is a cross section of a particular embodiment of a coupler having first and second pipe ends inserted into the interior passage of the coupler.
Figure 27 illustrates a method of using a particular embodiment of a coupler in which a pipe first end engages a tubular guide of the couple to guide the pipe into the interior passage of the coupler.
Figure 28 is a cross section of a particular embodiment of a coupler having a pipe inserted into the interior passage of the coupler.

### IV. MODE(S) FOR CARRYING OUT THE INVENTION

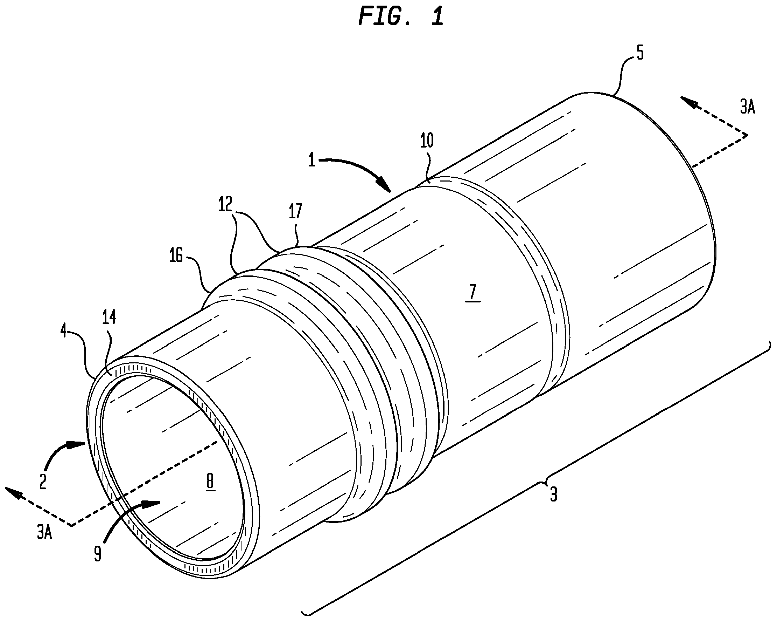

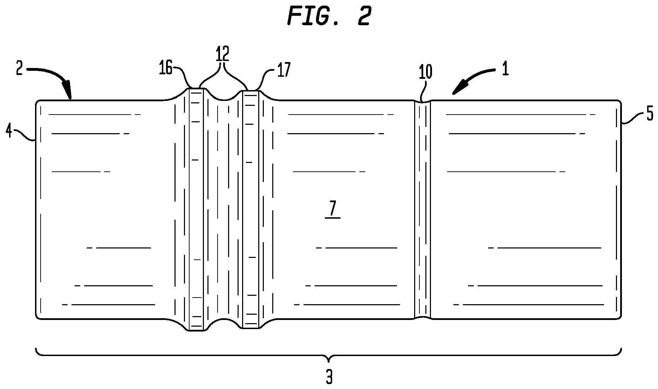

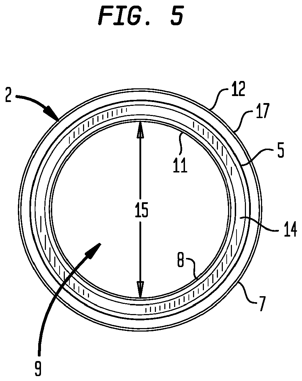

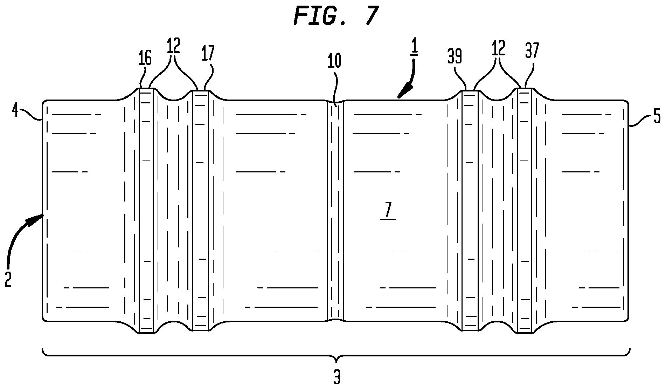

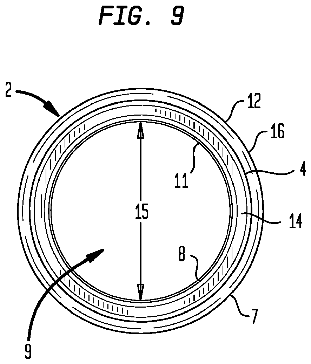

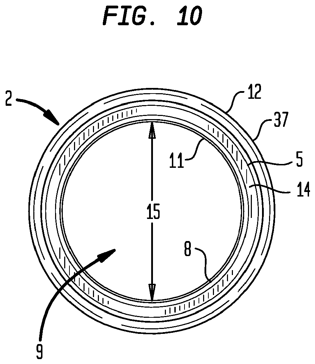

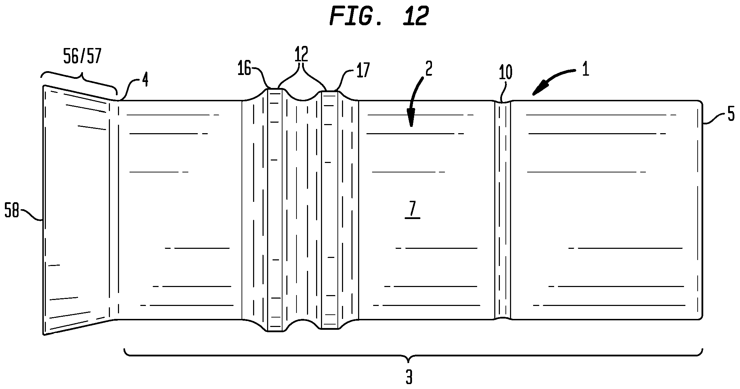

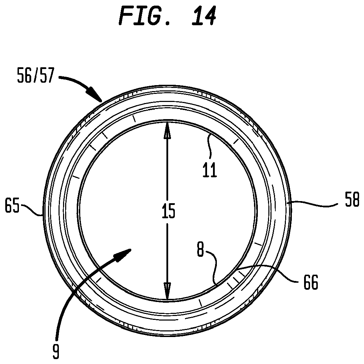

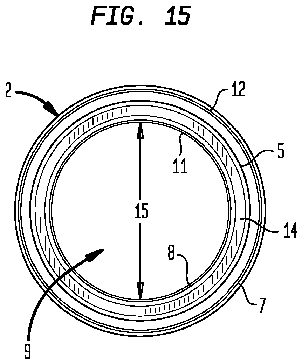

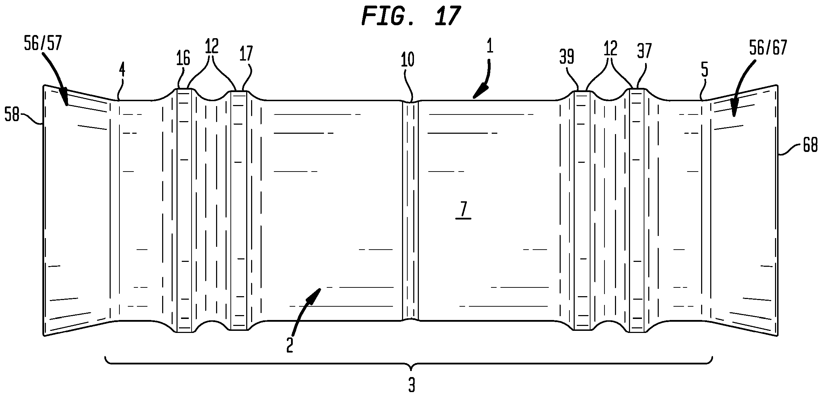

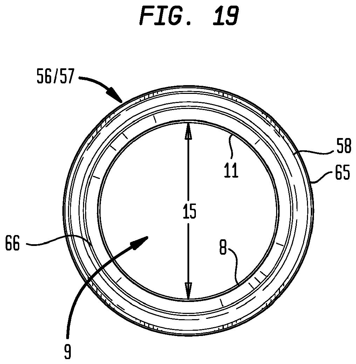

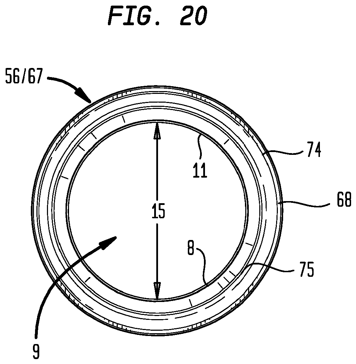

Generally referring to Figures 1 through 27, embodiments of a coupler (1) can include a tubular conduit (2) having a length (3) disposed between a first end (4) and a second end (5) and a thickness (6) disposed between an external surface (7) and an internal surface (8) defining an interior passage (9). As to particular embodiments, the coupler can, but need not necessarily include, one or more of an external annular groove (10) disposed in the external surface (7) overlaying an internal annular member (11) disposed on the internal surface (8), and one or more external annular members (12) disposed on the external surface (7) correspondingly overlaying one or more internal annular grooves (13) disposed in said internal surface (8).

Again, generally referring to Figures 1 through 27, in particular embodiments, the tubular conduit (2) can have a length (3) disposed between a first end (4) and a second end (5) of between about 165.1 millimeters (6.5 inches) to about 215.9 millimeters (8.5 inches) ; however, it is not intended that this illustrative example, preclude embodiments that may have a greater or lesser length. In further particular embodiments, the length (3) of the tubular conduit (2) can be selected from the group including or consisting of: about 167.64 mm (6.6 inches) to about 172.72 mm (6.8 inches), about 170.18 mm (6.7 inches) to about 175.26 mm (6.9 inches), about 172.72 mm (6.8 inches) to about 177.8 mm (7.0 inches), about 175.26 mm (6.9 inches) to about 180.34 mm (7.1 inches), about 177.8 mm (7.0 inches) to about 182.88 mm (7.2 inches), about 180.34 mm (7.1 inches) to about 185.42 mm (7.3 inches), about 182.88 mm (7.2 inches) to about 187.96 mm (7.4 inches), about 185.42 mm (7.3 inches) to about 190.5 mm (7.5 inches), about 187.96 mm (7.4 inches) to about 193.04 mm (7.6 inches), about 190.5 mm (7.5 inches) to about 195.58 mm (7.7 inches), about 193.04 mm (7.6 inches) to about 198.12 mm (7.8 inches), about 195.58 mm (7.7 inches) to about 200.66 mm (7.9 inches), about 198.12 mm (7.8 inches) to about 203,2 mm (8.0 inches), about 200.66 mm (7.9 inches) to about 205.74 mm (8.1 inches), about 203,2 mm (8.0 inches) to about 208.28 mm (8.2 inches), about 205.74 mm (8.1 inches) to about 210.82 mm (8.3 inches), about 208.28 mm (8.2 inches) to about 213.36 mm (8.4 inches), and combinations thereof.

Again, referring generally to Figures 1 through 27, the tubular conduit (2) can include a conduit wall (14) having a thickness (6) disposed between an external surface (7) and an internal surface (8). In particular embodiments, the thickness (6) of the conduit wall (14) can, but need not necessarily, be about 3.81 millimeters (0.15 inches) to about 8.89 millimeters (0.35 inches). In further particular embodiments, the thickness (6) of the conduit wall (14) can be selected from the group including or consisting of: about 4.06 mm (0.16 inches) to about 5.08 mm (0.2 inches), about 4.45 mm (0.175 inches) to about 5.72 mm (0.225 inches), about 5.08 mm (0.2 inches) to about 6.35 mm (0.25 inches), about 5.72 mm (0.225 inches) to about 6.99 mm (0.275 inches), about 6.35 mm (0.25 inches) to about 7.62 mm (0.3 inches), about 6.99 mm (0.275 inches) to about 8.23 mm (0.325 inches), about 7.62 mm (0.3 inches) to about 8.34 mm (0.34 inches), and combinations thereof; however, this is not intended to preclude embodiments having a greater or lesser thickness.

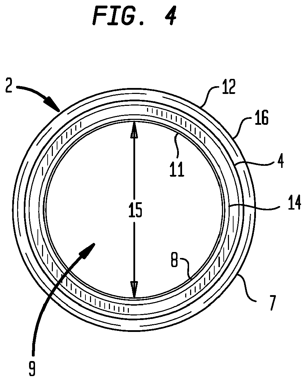

Again, referring primarily to Figures 1 through 27, the internal surface (8) of the tubular conduit (2) can define an interior passage (9) communicating between the first and second ends (4)(5). In particular embodiments, as shown in the examples of Figures 4, 5, 9, and 10, the tubular conduit (2) can, but need not necessarily, have a generally cylindrical internal surface (8). The interior passage (9) can have a diameter (15) of about 12.7 millimeters (0.5 inch) to about 114.3 millimeters (4.5 inches) . In further particular embodiments, the diameter (15) can be selected from the group including or consisting of: about 19.05 mm (0.75 inches) to about 31.75 mm (1.25 inches), about 25.4 mm (1.0 inches) to about 38.1 mm (1.5 inches), about 31.75 mm (1.25 inches) to about 44.45 mm (1.75 inches), about 38.1 mm (1.5 inches) to about 50.8 mm (2.0 inches), about 44.45 mm (1.75 inches) to about 57.15 mm (2.25 inches), about 50.8 mm (2.0 inches) to about 63.5 mm (2.5 inches), about 57.15 mm (2.25 inches) to about 69.85 mm (2.75 inches), about 63.5 mm (2.5 inches) to about 76.2 mm (3.0 inches), about 69.85 mm (2.75 inches) to about 82.55 mm (3.25 inches), about 76.2 mm (3.0 inches) to about 88.9 mm (3.5 inches), about 82.55 mm (3.25 inches) to about 95.25 mm (3.75 inches), about 88.9 mm (3.5 inches) to about 101.6 mm (4.0 inches), about 95.25 mm (3.75 inches) to about 107.95 mm (4.25 inches), and combinations thereof; however, this is not intended to preclude embodiments that have a greater or lesser diameter (15).

Embodiments of the tubular conduit (2) can be produced from a wide variety of materials. As illustrative examples, the tubular conduit (2) can be produced from a material selected from the group including or consisting of: a metal, such as, copper or aluminum, concrete, a plastic, such as, polyvinyl chloride, acrylonitrile butadiene styrene, polyethylene, polypropylene, and combinations thereof; however, these illustrative examples are not intended to preclude embodiments produced from other materials. In particular embodiments, the tubular conduit (2) can be produced from a transparent, translucent, semi-opaque, or opaque material. The internal surface (8), external surface (7), or both, can have the same or different surface roughness or surface finish.

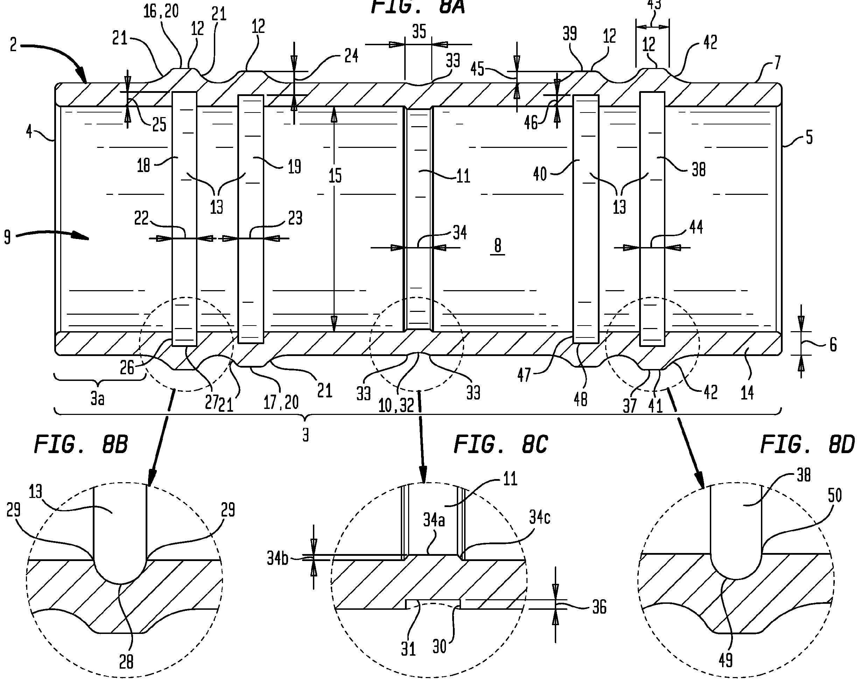

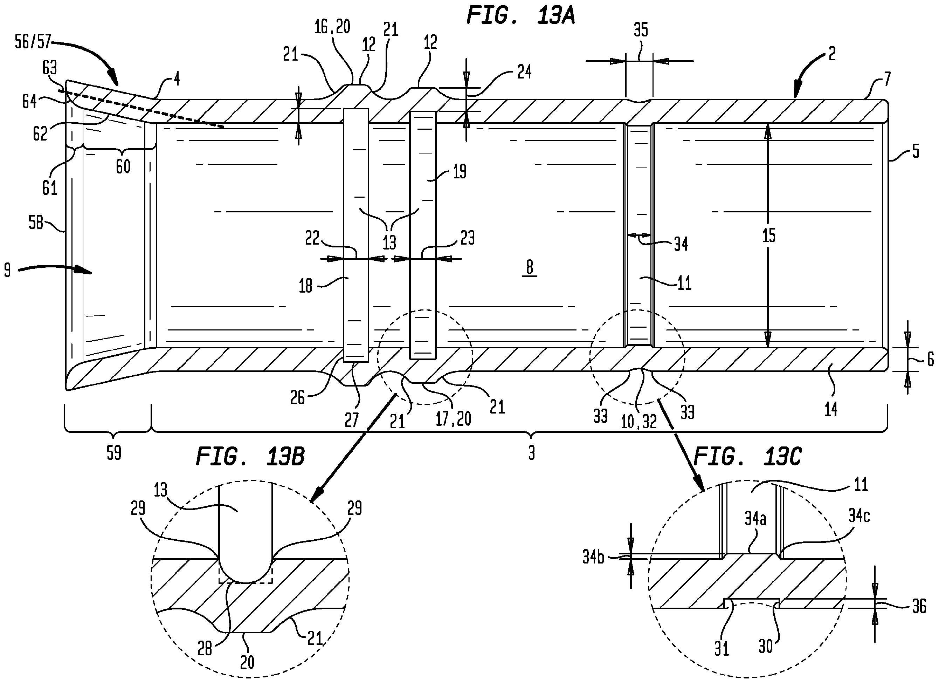

Now referring generally to Figures 1 through 27, particular embodiments of a coupler (1) can, but need not necessarily, include one or more external annular members (12). As to particular embodiments, a first external annular member (16) can be circumferentially disposed on the external surface (7) of the tubular conduit (2). As to particular embodiments, a second external annular member (17) can be circumferentially disposed on the external surface (7) of the tubular conduit (2). In particular embodiments, the first external annular member (16) can overlay a first internal annular groove (18) circumferentially disposed in the internal surface (8) of the tubular conduit (2). As to particular embodiments, a first and second external annular member (16)(17) can correspondingly overlay a first and second internal annular groove (18)(19) circumferentially disposed in axial spaced apart relation on the internal surface (8) of the tubular conduit (2) (as shown in the examples of Figure 8A and 13A). In particular embodiments, the first external annular member (16) overlaying the first internal annular groove (18) and the second external annular member (17) overlaying the second internal annular groove (19) can further be disposed in axial spaced apart relation on the external surface (7) of the tubular conduit (2) proximate the first end (4) (as shown in the illustrative examples of Figures 1 through 5). In further particular embodiments, the first external annular member (16) overlaying the first internal annular groove (18) can be disposed a lesser distance from the first end (4) than the second external annular member (17) overlaying the second internal annular groove (19).

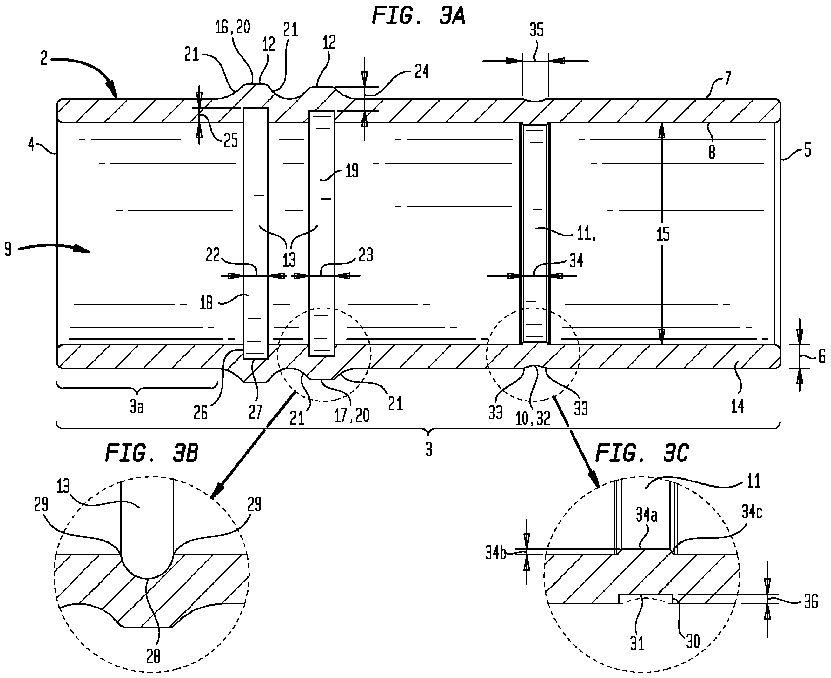

Now referring primarily to Figures 3A, 8A, 13A and 18A, in particular embodiments, each of the first or second external annular members (16)(17) can be configured to have a crown (20) disposed at a height (24) outward of the external surface (7) of the tubular conduit (2). Each of the first and second annular members (16)(17) can have annular member sides (21) which can, but need not necessarily, taper from the crown (20) towards the external surface (7). In other particular embodiments, each of the annular member sides (21) can, but need not necessarily, extend orthogonally between the crown and the external surface (7). In particular embodiments, the width (22) of the crown (20) can be substantially equal to a width (23) of the corresponding first or second internal annular grooves (18)(19). In particular embodiments, the height (24) of the crown (20) of the first or second external annular members (16)(17) can be between about 1.0 times and about 2.0 times that of the depth (25) of the corresponding first and second internal annular grooves (18)(19).

In particular embodiments, each of the first and second internal annular grooves (18)(19) can, but need not necessarily, be configured to have two annular groove sides (26) disposed orthogonal to the bottom (27) of each of the respective first and second internal annular grooves (18)(19), as shown in the examples of Figures 3A, 8A, 13A, and 18A. In further particular embodiments, each of the first and second internal annular grooves (18)(19) can, but need not necessarily, be configured as an arcuate bottom (28) disposed between the edges (29) of the respective first and second internal annular grooves (18)(19), as shown in the examples of Figures 3B and 8B.

Now referring primarily to Figures 1, 3A, 3C, 6, 8A, 8C, 11, 13A, 13C, 16, 18A, and 18C, in particular embodiments of a coupler (1), an external annular groove (10) can be circumferentially disposed on the external surface (7) of the tubular conduit (2) to overlay an internal annular member (11) circumferentially disposed on the internal surface (8) of the tubular conduit (2). The external annular groove (10) can, but need not necessarily, be configured to have two annular groove sides (30) disposed orthogonal to a bottom (31) of the external annular groove (10), as shown in the examples of Figures 3C, 8C, 13C, and 18C. In further particular embodiments, the external annular groove (10) can, but need not necessarily, be configured as a single arcuate annular groove (32) disposed between the edges (33) of the external annular groove (10), as shown in the examples of Figures 3A, 8A, 13A and 18A.

Now referring primarily to Figures 3A, 8A, 13A, and 18A, in particular embodiments, the internal annular member (11) can dispose a crown (34a) at a height (34b) inward of the internal surface (8) of the tubular conduit (2). Each internal annular member side (34c) of the internal annular member (11) can, but need not necessarily, taper from the crown (20) towards the internal surface (8). In other particular embodiments, each internal annular member side (34c) of the internal annular member (11) can, but need not necessarily, be orthogonal to the internal surface (8). The height (34b) of the internal annular member (11) at the crown (34a) can be between about 1.0 times and about 2.0 times that of the depth (36) of the external annular groove (10). In particular embodiments, the width (34) of the crown (34a) can be substantially equal to the width (35) of the external annular groove (10). The external annular groove (10) overlaying the internal annular member (11) can further, but need not necessarily, be disposed proximate the second end (5) of the tubular conduit (2).

Now referring primarily to Figures 3A and 8A, in particular embodiments, the internal surface (8) of the tubular conduit (2) can, but need not necessarily, taper (3A) as the internal surface (8) approaches the first internal annular groove (18) from the first end (4) of the tubular conduit (2). The internal surface (8) can taper about 0.254 millimeters (0.01 inches) to about 0.762 millimeters (0.03 inches) between the first end (4) and the first internal annular groove (18); however, this is not intended to preclude embodiments which taper (3A) to a greater or lesser degree. In further particular embodiments, the taper of the internal surface (8) between the first end (4) and the first internal annular groove (18) can be selected from the group including or consisting of: about 0.305 mm (0.012 inches) to about 0.356 mm (0.014 inches), about 0.330 mm (0.013 inches) to about 0.381 mm (0.015 inches), about 0.356 mm (0.014 inches) to about 0.406 mm (0.016 inches), about 0.381 mm (0.015 inches) to about 0.432 mm (0.017 inches), about 0.406 mm (0.016 inches) to about 0.457 mm (0.018 inches), about 0.432 mm (0.017 inches) to about 0.483 mm (0.019 inches), about 0.483 mm (0.018 inches) to about 0.508 mm (0.020 inches), about 0.483 mm (0.019 inches) to about 0.533 mm (0.021 inches), about 0.508 mm (0.020 inches) to about 0.559 mm (0.022 inches), about 0.533 mm (0.021 inches) to about 0.584 mm (0.023 inches), about 0.559 mm 0.559 mm (0.022 inches) to about 0.610 mm (0.024 inches), about 0.584 mm (0.023 inches) to about 0.635 mm (0.025 inches), about 0.610 mm (0.024 inches) to about 0.660 mm (0.026 inches), about 0.635 mm (0.025 inches) to about 0.686 mm (0.027 inches), about 0.660 mm (0.026 inches) to about 0.711 mm (0.028 inches), about 0.686 mm (0.027 inches) to about 0.737 mm (0.029 inches), and combinations thereof.

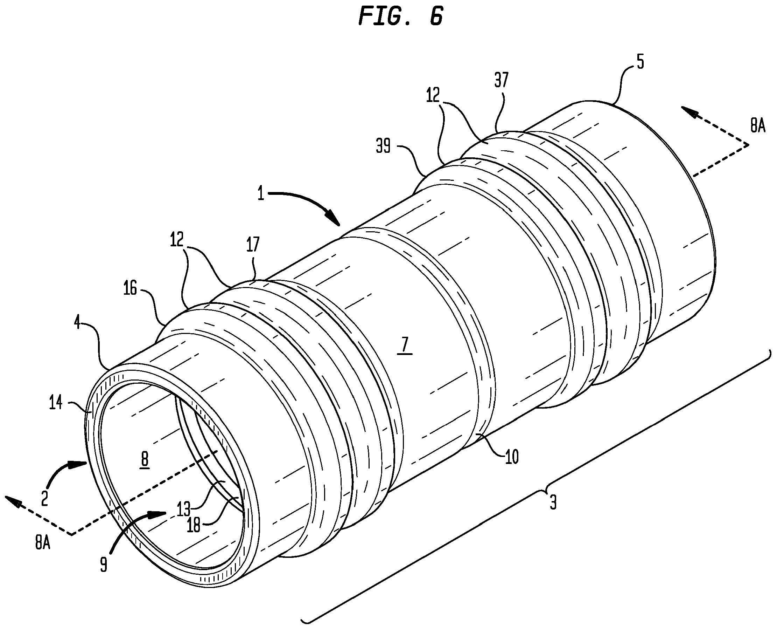

Referring generally to Figures 6 through 10 and 16 through 20, particular embodiments of a coupler (1) can further include a third external annular member (37) circumferentially disposed on the external surface (7) of the tubular conduit (2) and overlaying a third internal annular groove (38) circumferentially disposed in the internal surface (8) of the tubular conduit (2). Additionally, a fourth external annular member (39) can be circumferentially disposed on the external surface (7) of the tubular conduit (2) and overlaying a fourth internal annular groove (40) circumferentially disposed in the internal surface (8) of the tubular conduit (2). The third and fourth external annular members (37)(39) correspondingly overlaying the third and fourth internal annular grooves (38)(40) can be disposed in axial spaced apart relation on the external surface (7) of the tubular conduit (2) proximate the second end (5). The third external annular member (37) overlaying the third internal annular groove (38) can be disposed a lesser distance from the second end (5) than the fourth external annular member (39) overlaying the fourth internal annular groove (40). In particular embodiments, the external annular groove (10) overlaying the internal annular member (11) can be medially disposed on the tubular conduit (2) between the second external annular member (17) and the fourth external annular member (39).

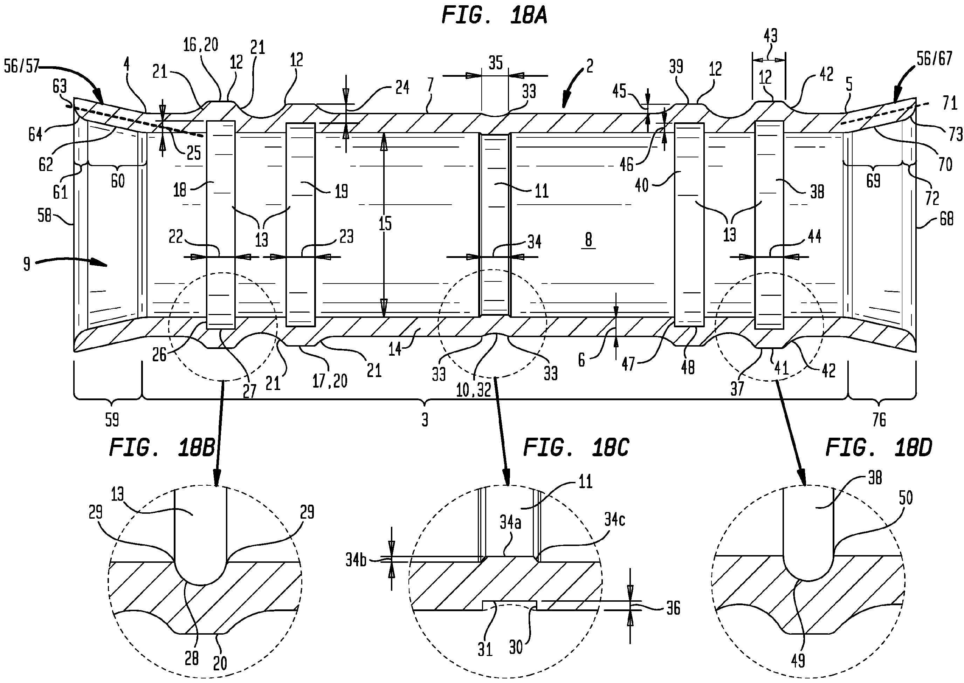

Now referring primarily to Figures 8A and 18A, in particular embodiments, each of the third and fourth external annular members (37)(39) can have a crown (41) disposed outward from the external surface (7). Each external annular member side (42) of the third and fourth external annular members (37)(39) can, but need not necessarily, taper towards the external surface (7). In other particular embodiments, each external annular member side (42) of the third and fourth external annular members (37)(39) can, but need not necessarily, be disposed orthogonal to the external surface (7). The height (45) of the crown (41) of the third and fourth external annular members (37)(39) can be between about 1.0 times and about 2.0 times that of the depth (46) of the corresponding third and fourth internal annular grooves (38)(40). In particular embodiments, the width (43) of the crown (41) can be substantially equal to a width (44) of the corresponding third and fourth internal annular grooves (38)(40). However, these illustrative examples of the height (45) and width (44) of the crown (41) are not intended to preclude embodiments having a greater or lesser height (45) or width (44).

Again referring primarily to Figures 8A and 18A, in particular embodiments, each of the third and fourth internal annular grooves (38)(40) can, but need not necessarily, have a pair of groove sides (47) orthogonally joined to the bottom (48) of each of the respective third and fourth internal annular grooves (38)(40). In further particular embodiments, each of the third and fourth internal annular grooves (38)(40) can, but need not necessarily, be configured as an arcuate bottom (49) disposed between the edges (50) of the respective third and fourth internal annular grooves (38)(40), as shown in the example of Figures 8D and 18D.

In particular embodiments, the first internal annular groove (18), the second internal annular groove (19), the third internal annular groove (38), the fourth internal annular groove (40), and the external annular groove (10) can each have a depth (25)(36)(46) of about 2.54 millimeters (0.1 inches) to about 7.62 millimeters (0.3 inches). In further particular embodiments, the depth (25)(36)(46) of the first internal annular groove (18), the second internal annular groove (19), the third internal annular groove (38), the fourth internal annular groove (40), and the external annular groove (10) can be selected from the group including or consisting of: about 3.05 mm (0.12 inches) to about 3.56 mm (0.14 inches), about 3.30 mm (0.13 inches) to about 3.81 mm (0.15 inches), about 3.56 mm (0.14 inches) to about 4.06 mm (0.16 inches), about 3.81 mm (0.15 inches) to about 4.32 mm (0.17 inches), about 4.06 mm (0.16 inches) to about 4.57 mm (0.18 inches), about 4.32 mm (0.17 inches) to about 4.83 mm (0.19 inches), about 4.57 mm (0.18 inches) to about 5.08 mm (0.2 inches), about 4.83 mm (0.19 inches) to about 5.33 mm (0.21 inches), about 5.08 mm (0.2 inches) to about 5.59 mm (0.22 inches), about 5.33 mm (0.21 inches) to about 5.84 mm (0.23 inches), about 5.59 mm (0.22 inches) to about 6.10 mm (0.24 inches), about 5.84 mm (0.23 inches) to about 6.35 mm (0.25 inches), about 6.10 mm (0.24 inches) to about 6.60 mm (0.26 inches), about 6.35 mm (0.25 inches) to about 6.86 mm (0.27 inches), about 6.60 mm (0.26 inches) to about 7.11 mm (0.28 inches), about 6.86 mm (0.27 inches) to about 7.37 mm (0.29 inches), and combinations thereof. These illustrative examples are not intended to preclude embodiments having a greater or lesser groove depth.

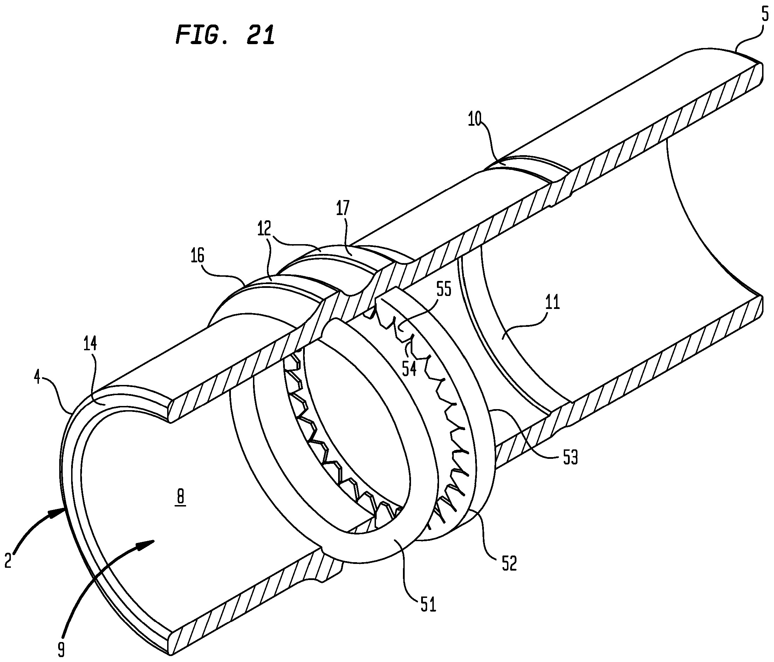

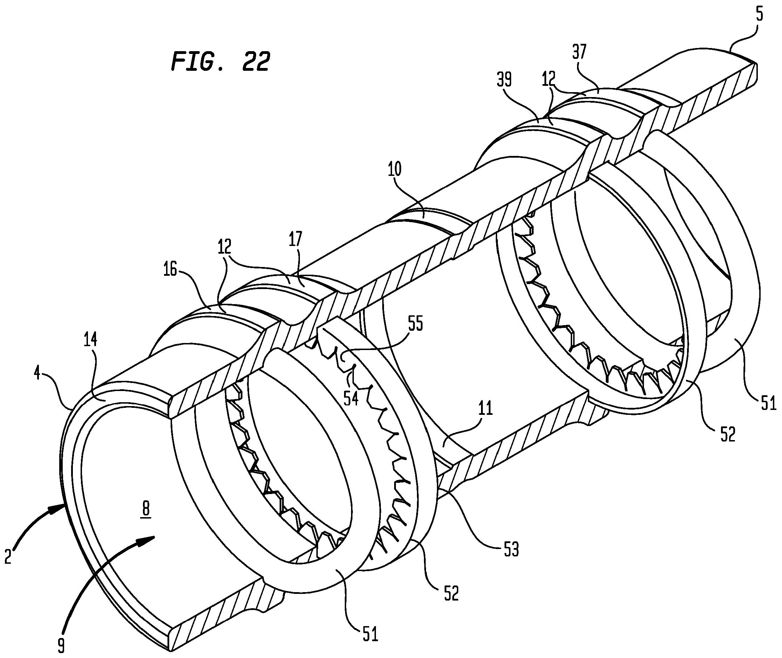

Now referring primarily to Figures 21 and 22, particular embodiments of the coupler (1) can include a seal element (51) disposed in the first internal annular groove (18). The seal element (51) can be configured to have a portion of the seal element (51) extending outward of the internal surface (8) into the interior passage (9). While the seal element shown in Figures 21 and 22 have a circular cross-sectional width; this is not intended to preclude particular embodiments of the seal element having other configurations of the cross-sectional width such as square, rectangular, or oval cross-sectional widths. The seal element (51) can be produced from a material selected from the group including or consisting of: ethylene propylene diene monomer, silicone, fluorocarbon, fluorosilicone, polyurethane, tetrafluoroethylene/propylene, nitrile, and neoprene, or combinations thereof.

Again referring primarily to Figures 21 and 22, particular embodiments of the coupler (1) can further include an annular retaining member (52). The annular retaining member (52) can have an outer periphery (53) and an inner periphery (54). A plurality of slots can be disposed in circumferentially spaced apart relation about the inner periphery (54) and radially extend from the inner periphery (54) toward the outer periphery (53) to define a plurality of tabs (55). As to particular embodiments, the plurality of tabs (55) can be a plurality of resiliently flexible tabs. In particular embodiments, each of the plurality of tabs (55) can taper toward the inner periphery (as shown in the examples of Figures 21 and 22). The outer periphery (53) can be disposed in the second internal annular groove (19). The annular retaining member (52) can be produced from a material selected from the group including or consisting of rust-resistant metal, coated metal, metal, rigid plastics, coated rigid plastics, or combinations thereof.

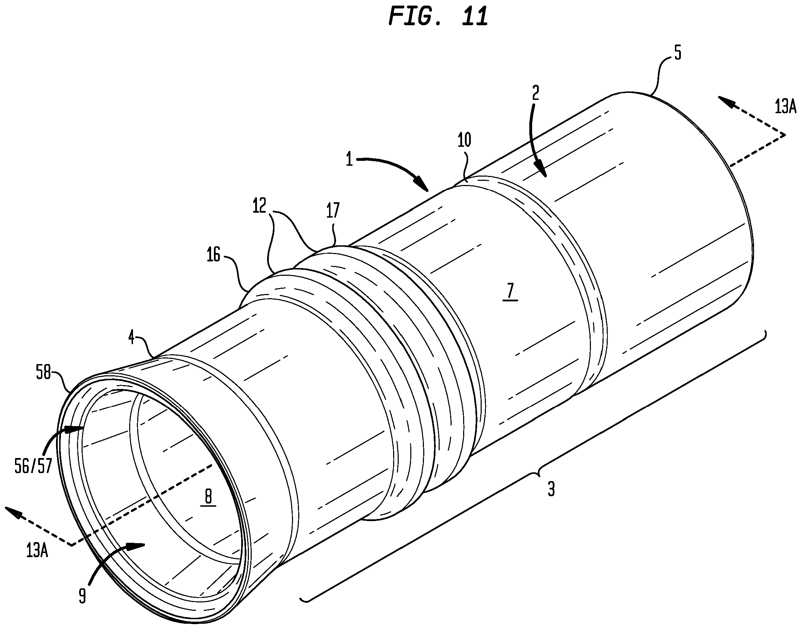

Now referring primarily to Figures 11 through 20, particular embodiments of a coupler (1) can include one or more tubular guides (56). A first tubular guide (57) can be coupled to the conduit first end (4). The first tubular guide (57) can continuously widen between the conduit first end (4) and a first tubular guide terminal end (58). Now referring primarily to Figure 13A, the first tubular guide (57) can have a first tubular guide length (59) disposed between the tubular conduit first end (4) and the first tubular guide terminal end (58) of between about 12.7 mm (0.5 inches) to about 25.4 mm (1 inch). However, this illustrative range is not intended to preclude embodiments having a greater or lesser length.

Now referring primarily to Figure 13A, the first tubular guide (57) will include a first tubular guide first region (60) and a first tubular guide second region (61). The first tubular guide first region (60) can be disposed proximate the conduit first end (4). The first tubular guide first region (60) further has a first radius of curvature (62) along the longitudinal axis (63) of the first tubular guide (57). The first tubular guide second region (61) is directly connected to the first tubular guide first region (60) and extend toward the first tubular guide terminal end (58). The first tubular guide second region (61) has a second radius of curvature (64) along the longitudinal axis (63) of the first tubular guide (57). The second radius of curvature (64) is less than the first radius of curvature (62).

Again referring primarily to Figure 13A, in particular embodiments, the first tubular guide first region (60) can have a first radius of curvature (62) of about 11.430 millimeters (0.450 inches) to about 17.780 millimeters (0.700 inches). In further embodiments, the first radius of curvature (62) can be selected from the group consisting of: about 11.684 mm (0.460 inches) to about 12.700 mm (0.500 inches), about 12.065 mm (0.475 inches) to about 13.335 mm (0.525 inches, about 12.700 mm (0.500 inches) to about 13.7 mm (0.550 inches), about 13.335 mm (0.525 inches) to about 14.605 mm (0.575 inches), about 13.7 mm (0.550 inches) to about 15.240 mm (0.600 inches), about 14.605 mm (0.575 inches) to about 15.875 mm (0.625 inches), about 15.240 mm (0.600 inches) to about 16.510 mm (0.650 inches), about 15.875 mm (0.625 inches) to about 17.145 mm (0.675 inches), about 16.510 mm (0.650 inches) to about 17.526 mm (0.690 inches), and combinations thereof. However, these examples of a first radius of curvature (62) are not intended to preclude embodiments having a greater or lesser first radius of curvature (62).

Again referring primarily to Figure 13A, in particular embodiments, the first tubular guide second region (61) can have a second radius of curvature (64) of about 3.81 millimeters (0.150 inches) to about 11.43 millimeters (0.450 inches). In further embodiments, the second radius of curvature (64) can be selected from the group consisting of: about 4.640 mm (0.160 inches) to about 5.080 mm (0.200 inches), about 4.445 mm (0.175 inches) to about 5.715 mm (0.225 inches), about 5.080 mm (0.200 inches) to about (0.250 inches), about 5.715 mm (0.225 inches) to about 6.985 mm (0.275 inches), about 6.350 mm (0.250 inches) to about 7.620 mm (0.300 inches), about 6.985 mm (0.275 inches) to about 8.255 mm (0.325 inches), about 7.620 mm (0.300 inches) to about 8.890 mm (0.350 inches), about 8.255 mm (0.325 inches) to about 9.525 mm (0.375 inches), about 8.890 mm (0.350 inches) to about 10.160 mm (0.400 inches), about 9.525 mm (0.375 inches) to about 10.795 mm (0.425 inches), about 10.160 mm (0.400 inches) to about 11.176 mm (0.440 inches), and combinations thereof. However, these examples of a second radius of curvature (64) are not intended to preclude embodiments having a greater or lesser second radius of curvature (64).

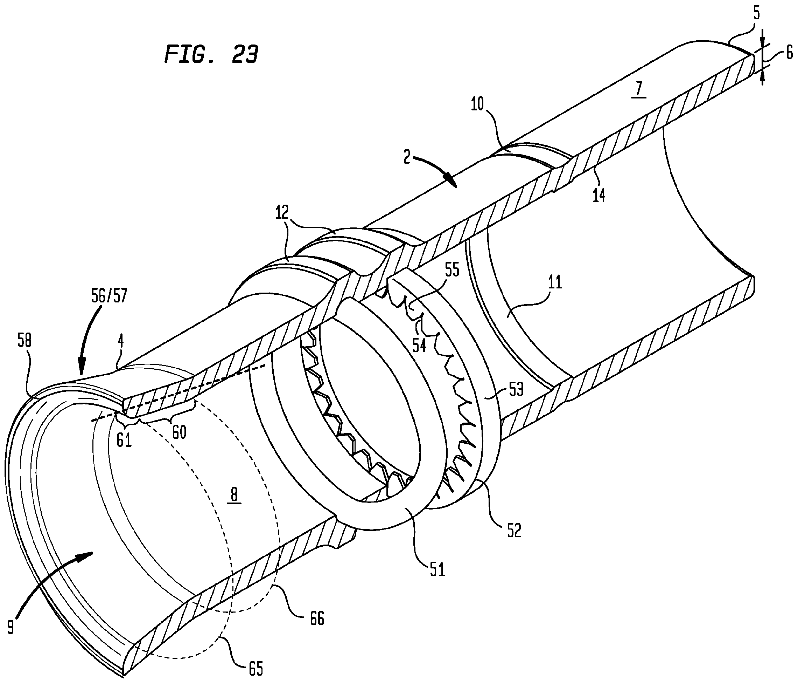

Now referring primarily to Figure 23, in particular embodiments, the ratio of the cross-section area (65) of the first tubular guide (57) at the first tubular guide terminal end (58) orthogonal to the longitudinal axis of the tubular conduit (2) to the cross-section area (66) of the first tubular guide (57) at the conduit first end (4) orthogonal to the longitudinal axis of the tubular conduit (2) can have a first ratio of about 1:0.75 to about 1:0.95. In further embodiments, the first ratio can be selected from the group consisting of: about 1 :0.76 to about 1 :0.77, about 1:0.765 to about 1:0.775, about 1:0.77 to about 1:0.78, about 1:0.775 to about 1:0.785, about 1:0.78 to about 1:0.79, about 1:0.785 to about 1:0.795, about 1:0.79 to about 1:0.80, about 1:0.795 to about 1:0.805, about 1:0.80 to about 1:0.81, about 1:0.805 to about 1:0.815, about 1:0.81 to about 1:0.82, about 1:0.815 to about 1:0.825, about 1:0.82 to about 1:0.83, about 1:0.825 to about 1:0.835, about 1:0.83 to about 1:0.84, about 1:0.835 to about 1:0.845, about 1:0.84 to about 1:0.85, about 1:0.845 to about 1:0.855, about 1:0.85 to about 1:0.86, about 1:0.855 to about 1:0.865, about 1:0.86 to about 1:0.87, about 1:0.865 to about 1:0.875, about 1:0.87 to about 1:0.88, about 1:0.875 to about 1:0.885, about 1:0.88 to about 1:0.89, about 1:0.885 to about 1:0.895, about 1:0.89 to about 1:0.90, about 1:0.895 to about 1:0.905, about 1:0.90 to about 1:0.91, about 1:0.905 to about 1:0.915, about 1:0.91 to about 1:0.92, about 1:0.915 to about 1:0.925, about 1:0.92 to about 1:0.93, about 1:0.925 to about 1:0.935, about 1:0.93 to about 1:0.94, and combinations thereof. However, these examples of a first ratio are not intended to preclude embodiments having a greater or lesser first ratio.

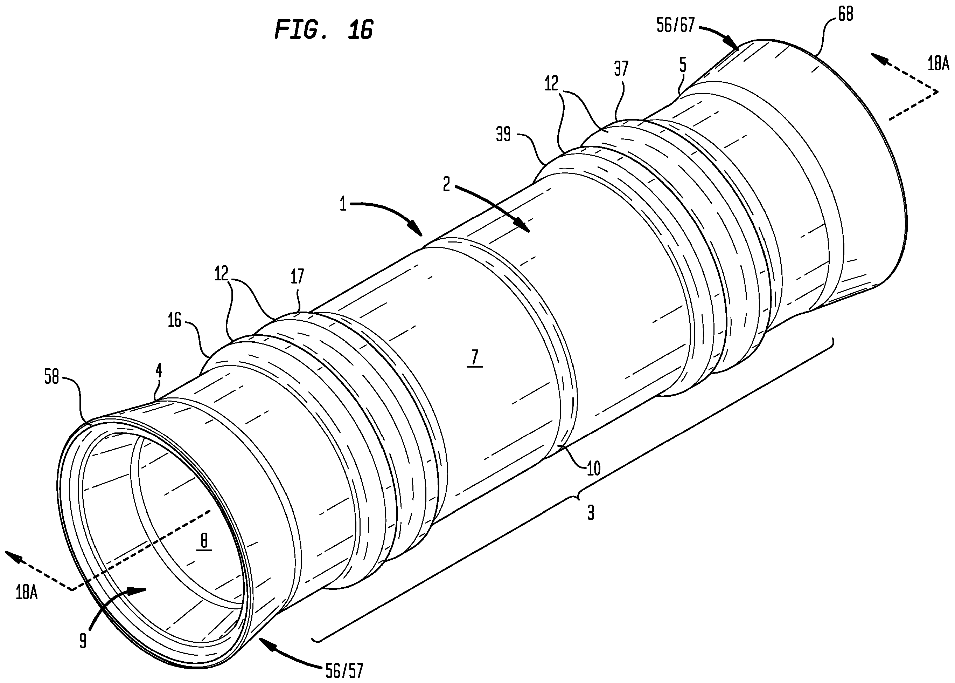

Now referring primarily to Figures 16 through 20, particular embodiments of a coupler (1) can further include a second tubular guide (67) coupled to the conduit second end (5). The second tubular guide (67) can widen between the conduit second end (5) and a second tubular guide terminal end (68). The second tubular guide (67) can include a second tubular guide first region (69) proximate the conduit second end (5). The second tubular guide first region (69) can have a third radius of curvature (70) along the longitudinal axis (71) of the second tubular guide (67). The second tubular guide (67) can further have a second tubular guide second region (72) disposed adjacent to the second tubular guide first region (69) and extending toward the second tubular guide terminal end (68). The second tubular guide second region (72) can have a fourth radius of curvature (73) along the longitudinal axis (71) of the second tubular guide (67). In particular embodiments, the fourth radius of curvature (73) of the second tubular guide second region (72) can be less than the third radius of curvature (70) of the second tubular guide first region (69).

Now referring primarily to Figure 18A, in particular embodiments, the second tubular guide first region (69) can have a third radius of curvature (70) of about 11.43 millimeters (0.450 inches) to about 17.78 millimeters (0.700 inches)(. In further embodiments, the third radius of curvature (70) of the second tubular guide first region (69) can be selected from the group consisting of: about 11.684 mm (0.460 inches) to about (0.500 inches, about 12.065 mm (0.475 inches) to about 13.335 mm (0.525 inches), about 12.700 mm (0.500 inches) to about 13.97 mm (0.550 inches), about 13.335 mm (0.525 inches) to about 14.605 mm (0.575 inches), about 13.97 mm (0.550 inches) to about 15.240 mm (0.600 inches), about 14.605 mm (0.575 inches to about 15.875 mm (0.625 inches), about 15.240 mm (0.600 inches) to about 16.510 mm (0.650 inches), about 15.875 mm (0.625 inches) to about 17.145 mm (0.675 inches), about 16.510 mm (0.650 inches) to about 17.526 mm (0.690 inches), and combinations thereof.

Again referring primarily to Figure 18A, in particular embodiments, the second tubular guide second region (72) can have a fourth radius of curvature (73) of about 3.81 millimeters (0.150 inches) to about 11.43 millimeters (0.450 inches) . In further embodiments, the fourth radius of curvature (73) can be selected from the group consisting of: about 4.064 mm (0.160 inches) to about 5.080 mm (0.200 inches), about 4.445 mm (0.175 inches) to about 5.715 mm (0.225 inches), about 5.080 mm (0.200 inches) to about 6.350 mm (0.250 inches), about 5.715 mm (0.225 inches) to about 6.985 mm (0.275 inches), about 6.350 mm (0.250 inches) to about 7.620 mm (0.300 inches), about 6.985 mm (0.275 inches) to about 8.255 mm (0.325 inches), about 7.620 mm (0.300 inches) to about 8.890 mm (0.350 inches), about 8.255 mm (0.325 inches) to about 9.525 mm (0.375 inches), about 8.890 mm (0.350 inches) to about 10.160 mm (0.400 inches), about 9.525 mm (0.375 inches) to about 10.795 mm (0.425 inches), about 10.160 mm (0.400 inches) to about 11.176 mm (0.440 inches), and combinations thereof.

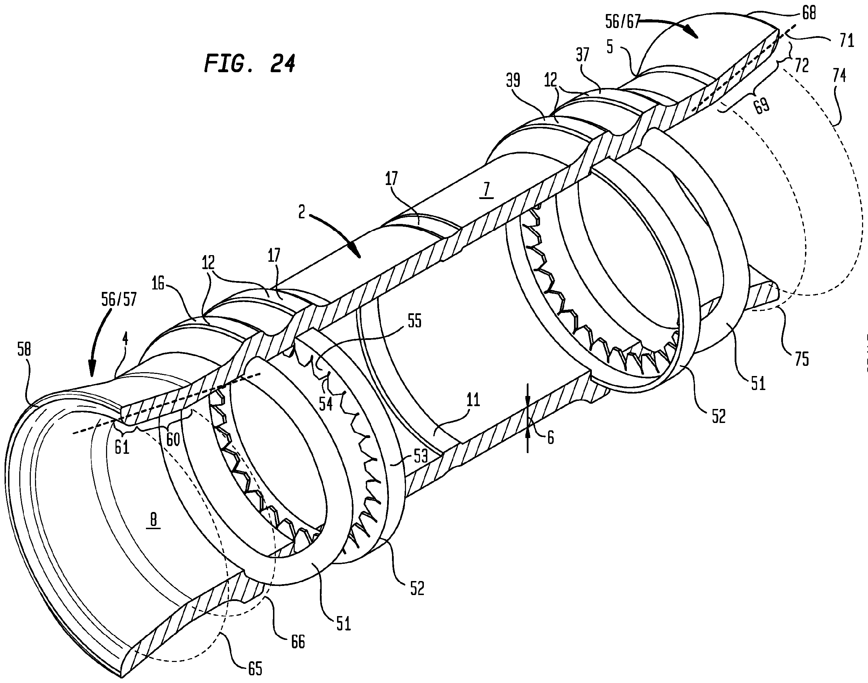

Now referring primarily to Figure 24, in particular embodiments, the ratio of a cross-section area (74) of the second tubular guide (67) at the second tubular guide terminal end (68) orthogonal to the longitudinal axis of the tubular conduit (2) to a cross-section area (75) of said second tubular guide (67) at the conduit second end (5) orthogonal to the longitudinal axis (71) of the tubular conduit (2) can have a second ratio of about 1:0.75 to about 1:0.95. In further embodiments, the second ratio can be selected from the group consisting of: about 1:0.76 to about 1:0.77, about 1:0.765 to about 1:0.775, about 1:0.77 to about 1:0.78, about 1:0.775 to about 1:0.785, about 1:0.78 to about 1:0.79, about 1:0.785 to about 1:0.795, about 1:0.79 to about 1:0.80, about 1:0.795 to about 1:0.805, about 1:0.80 to about 1:0.81, about 1:0.805 to about 1:0.815, about 1:0.81 to about 1:0.82, about 1:0.815 to about 1:0.825, about 1:0.82 to about 1:0.83, about 1:0.825 to about 1:0.835, about 1:0.83 to about 1:0.84, about 1:0.835 to about 1:0.845, about 1:0.84 to about 1:0.85, about 1:0.845 to about 1:0.855, about 1:0.85 to about 1:0.86, about 1:0.855 to about 1:0.865, about 1:0.86 to about 1:0.87, about 1:0.865 to about 1:0.875, about 1:0.87 to about 1:0.88, about 1:0.875 to about 1:0.885, about 1:0.88 to about 1:0.89, about 1:0.885 to about 1:0.895, about 1:0.89 to about 1:0.90, about 1:0.895 to about 1:0.905, about 1:0.90 to about 1:0.91, about 1:0.905 to about 1:0.915, about 1:0.91 to about 1:0.92, about 1:0.915 to about 1:0.925, about 1:0.92 to about 1:0.93, about 1:0.925 to about 1:0.935, about 1:0.93 to about 1:0.94, and combinations thereof. However, these examples of a second ratio are not intended to preclude embodiments having a greater or lesser second ratio.

Now referring primarily to Figure 18A the second tubular guide (67) can have a second tubular guide length (76) disposed between the tubular conduit second end (5) and the second tubular guide terminal end (68) of between about 12.7 mm (0.5 inches) to about 25.4 mm (1 inch). However, this illustrative range is not intended to preclude embodiments have a greater or lesser length.

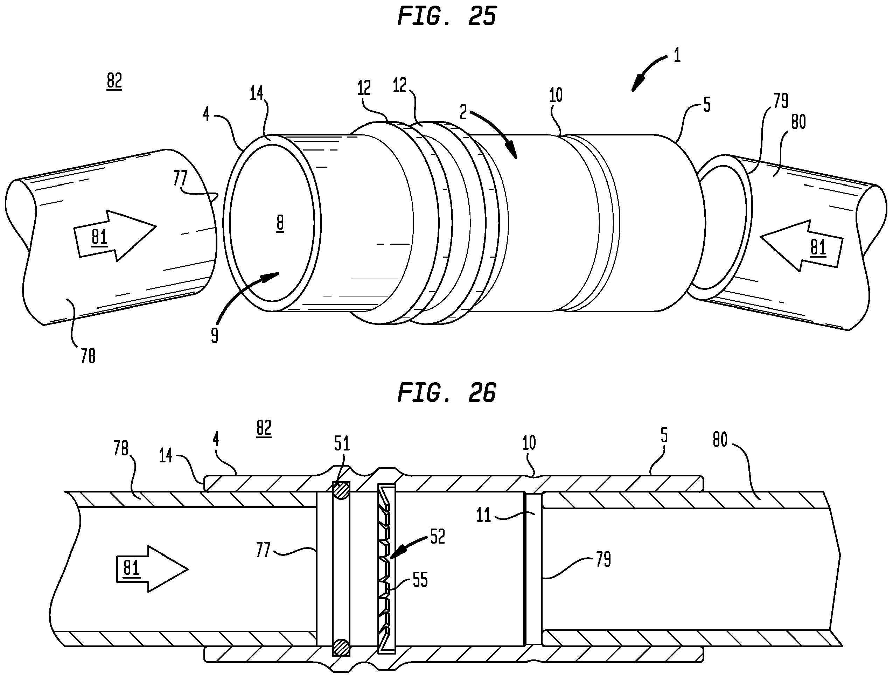

Now referring to Figures 25 and 26, a method of using the coupler (1) in a pipeline system (82) includes by insertingly engaging a first pipe first end (77) of a first pipe (78) into the first end (4) of the tubular conduit (2), and insertingly engaging a second pipe first end (79) of a second pipe (80) to the second end (5) of the tubular conduit (2). As to particular embodiments, the first pipe first end (77) of a first pipe (78) may be coupled in fixed engagement with the first end (4) of the tubular conduit (2) by interference fit or through the use of an amount of adhesive. However, as to particular embodiments, the first pipe first end (77) may not be coupled in fixed engagement to the coupler (1) by interference fit or the use of adhesives, whether due to the differences in the materials of the first pipe end (7) and the first end (4) of the tubular conduit (2), or otherwise. Accordingly, the first pipe first end (77) can be slidingly inserted into the first end (4) of the tubular conduit (2) to sealably engage the seal element (51) and sufficiently flex the resiliently flexible tabs (55) of the annular retaining member (52) to allow passage through the annular retaining member (52) toward the internal annular member (11). The resiliently flexible tabs (55) forcibly engage the first pipe first end (77) to prevent egress from the annular retaining member (52). The second pipe first end (79) may be compatible with interference fit or the use of adhesive to couple the second pipe (80) in fixed engagement to the second end (5) of the tubular conduit (2). Accordingly, an amount of adhesive can be disposed on the internal surface (8) of the tubular conduit (2) adjacent the second end (5). Adhesive can also be disposed on the second pipe (80) adjacent the second pipe first end (79) and the second pipe first end (79) can be slidingly inserted in the coupler second end (5) toward the internal annular member (11). As one illustrative example, the adhesive can, but need not necessarily, be an adhesive for adhering surfaces of polyvinyl chloride material.

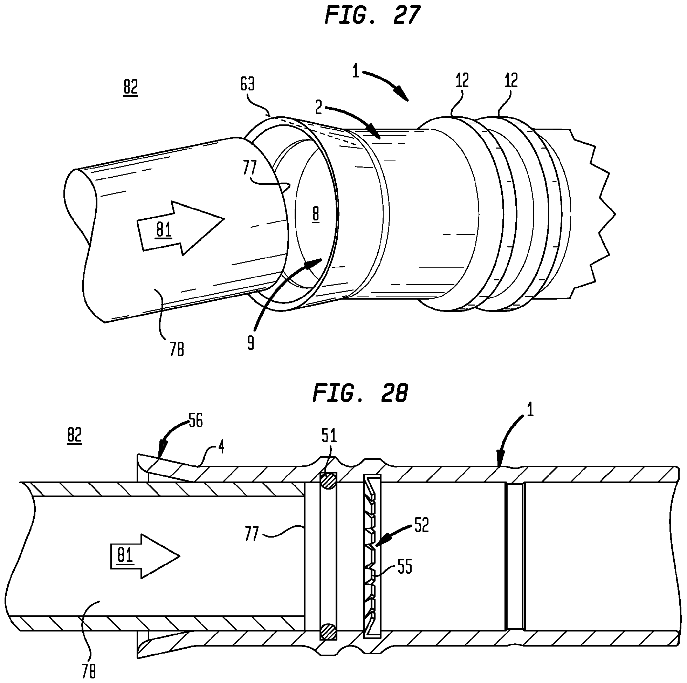

Generally referring to Figures 27 and 28, in particular embodiments, a method of using a coupler (1) including a tubular guide (56) can include positioning a coupler (1) in spatial relation to a first pipe first end (77). The first pipe first end (77) may be disposed in an angled relation to a longitudinal axis (63) of a tubular guide (56) coupled to a tubular conduit (2) of a coupler (1). The method can further include forcibly urging (81) the first pipe first end (77) along the tubular guide (56), and guiding the first pipe first end (77) into the interior passage (9) of the tubular conduit (2). In particular embodiments, the coupler (1) can, but need not necessarily include a seal element (51), and the first pipe first end (77) can be slidingly inserted into the conduit first end (4) to sealably engage the seal element (51). In further particular embodiments, the coupler (1) can include an annular retaining member (52) having resiliently flexible tabs (55), whereupon the first pipe first end (77) can be slidingly inserted into the conduit first end (4), sufficiently flexing the resiliently flexible tabs (55) of the annular retaining member (52) to allow passage through the annular retaining member (52). The resiliently flexible tabs (55) can forcibly engage the first pipe first end (77) to prevent egress from the annular retaining member (52).

As can be easily understood from the foregoing, the basic concepts of the present invention may be embodied in a variety of ways. The invention involves numerous and varied embodiments of a coupler and methods for making and using such couplers including the best mode.

## Claims

1. A coupler (1), comprising:
a tubular conduit (2) having a length (3) disposed between a conduit first end (4) and a conduit second end (5) and a conduit wall having a thickness (6) disposed between an external surface (7) and an internal surface (8), said internal surface defining an interior passage (9) between said conduit first end (4) and said conduit second end (5); and
a tubular guide (56) coupled to said conduit first end (4), said tubular guide (56) continuously widening between said conduit first end (4) and a tubular guide terminal end (58), said tubular guide (56) including:
a first tubular guide first region (60) directly connected to said conduit first end (4);
a first tubular guide second region (61) directly connected to said first tubular guide first region (60) and extending to said tubular guide terminal end (58);
said first tubular guide first region (60) having a first radius of curvature (62) along a longitudinal axis (63) of said tubular guide;
said first tubular guide second region (61) having a second radius of curvature (64) along said longitudinal axis (63) of said tubular guide, said second radius of curvature (64) less than said first radius of curvature (62), said first radius of curvature (62) and said second radius of curvature (64) outwardly curving from said interior passage (9).

2. The coupler of claim 1, further comprising a second tubular guide (67)coupled to said conduit second end (5), said second tubular guide (67) continuously widening between said conduit second end (5) and a second tubular guide terminal end (68), said second tubular guide including:
a second tubular guide first region (69) directly connected to said conduit second end (5);
a second tubular guide second region (72) directly connected to said second tubular guide first region (69) and extending to said second tubular guide terminal end (68);
said second tubular guide first region (69) having a third radius of curvature (70) along a longitudinal axis /71) of said second tubular guide (67);
said second tubular guide second region (72) having a fourth radius of curvature (73) along said longitudinal axis (71) of said second tubular guide (67), said fourth radius of curvature (73) less than said third radius of curvature (70) , said third radius of curvature (70) and said second radius of curvature (64) outwardly curving from said interior passage (9).

3. The coupler of claim 1 or 2, further comprising an external annular groove (10) circumferentially disposed on said external surface (7) of said tubular conduit (2), said annular groove (10) overlaying an internal annular member (11) circumferentially disposed on said internal surface (8) of said tubular conduit (2).

4. The coupler of claim 3, further comprising:
a plurality of external annular members (12) circumferentially disposed on said external surface (7) overlaying a corresponding plurality of internal annular grooves (13) circumferentially disposed on said internal surface (8) of said tubular conduit (2), said plurality of external annular members (12) including a first external annular member (16), a second external annular member (17), a third external annular member (37), and a fourth external annular member (39) each correspondingly overlaying one of said plurality of internal annular grooves, and wherein said plurality of internal annular grooves includes a first internal annular groove (18), a second internal annular grooves (19), a third internal annular groove (38), and fourth internal annular groove (40);
said first and second external annular members (16, 17) correspondingly overlaying said first and second annular grooves (18, 19) disposed in axial spaced apart relation on said external surface (7) of said tubular conduit (2) proximate said first end (4), said first external annular member (16) overlaying said first internal annular groove (18) disposed a lesser distance from said first end (4) than said second external annular member (17) overlaying said second internal annular groove (19); and
said third and fourth external annular members (37, 39) overlaying said third and fourth annular grooves (38, 40) disposed in axial spaced apart relation on said external surface (7) of said tubular conduit (2) proximate said second end (5), said third external annular member (37) overlaying said third internal annular groove (38) disposed a lesser distance from said second end (5) than said fourth external annular member (39) overlaying said fourth internal annular groove (40).

5. The coupler of claim 4, further comprising a first seal element (51) disposed in said first internal annular groove (18), wherein a portion of said first seal element (51) extending outward of said internal surface (8) into said interior passage (9).

6. The coupler of claim 5, further comprising a second seal element disposed in said third internal annular groove (38), wherein a portion of said second seal element extending outward of said internal surface (8) into said interior passage (9).

7. The coupler of claim 6, further comprising a first annular retaining member (52) having an outer periphery (53) and an inner periphery (54), said inner periphery (54) having a plurality of radially extending slots in circumferentially spaced apart relation about said inner periphery (52) defining a plurality of resiliently flexible tabs (55), said outer periphery (53) disposed in said second internal annular groove (19).

8. The coupler of claim 7, further comprising a second annular retaining member (52) having an outer periphery (53) and an inner periphery (54), said inner periphery (54) having a plurality of radially extending slots in circumferentially spaced apart relation about said inner periphery (57) defining a plurality of resiliently flexible tabs (55), said outer periphery (53) disposed in said fourth internal annular groove (19).

9. The coupler of claim 8, wherein said internal surface (8) of said tubular conduit (2) tapers approaching said first external annular member (16).

10. The coupler of claim 9, wherein said internal surface (8) of said tubular conduit (2) tapers approaching said third external annular member (37).

11. The coupler of claim 10, wherein said first external annular member (16), said second external annular member (17), said third external annular member (37), and said fourth external annular member (39) each include a crown (20, 41) disposed between a pair of sides (21) which taper towards said external surface (7) of said tubular conduit (2), each said crown (20, 41) and each said internal annular groove (18, 19, 38, 40) having substantially equal width, each said crown (20, 41) having a height (24) of between about 1.0 times and about 2.0 times that of a depth (25) of said internal annular groove (18, 19, 38, 40).

12. The coupler of claim 11, wherein said tubular conduit (2) has a generally cylindrical internal surface (8).

13. The coupler of claim 12, wherein said material comprising said tubular conduit (2) is selected from the group consisting of: metal, copper, concrete, polyvinyl chloride, acrylonitrile butadiene styrene, polyethylene, and combinations thereof.

14. The coupler of claim 5, wherein said seal element (51) comprises a material selected from the group consisting of: ethylene propylene diene monomer, silicone, fluorocarbon, fluorosilicone, polyurethane, tetrafluoroethylene/propylene, nitrile, and neoprene, or combinations thereof.

15. The coupler of claim 3, wherein said external annular groove (10) overlaying an internal annular member (11) medially disposed on said tubular conduit (2).

## Patentansprüche

1. Koppler (1), umfassend:
eine rohrförmige Leitung (2), die eine sich zwischen einem ersten Leitungsende (4) und einem zweiten Leitungsende (5) erstreckende Länge und eine Leitungswand mit einer Dicke (6) zwischen einer Außenfläche (7) und einer Innenfläche (8) aufweist, wobei die Innenfläche einen inneren Durchgang (9) zwischen dem ersten Leitungsende (4) und dem zweiten Leitungsende (5) definiert, und
eine rohrförmige Führung (56), die mit dem ersten Leitungsende (4) gekoppelt ist, wobei sich die rohrförmige Führung (56) kontinuierlich zwischen dem ersten Leitungsende (4) und einem Rohrförmige-Führung-Terminalende (58) erweitert, wobei die rohrförmige Führung (56) umfasst:
einen ersten Erste-Rohrförmige-Führung-Bereich (60), der direkt mit dem ersten Leitungsende (4) verbunden ist, und
einen zweiten Erste-Rohrförmige-Führung-Bereich (61), der direkt mit dem ersten Erste-Rohrförmige-Führung-Bereich (60) verbunden ist und sich zu dem Rohrförmige-Führung-Terminalende (58) erstreckt,
wobei der erste Erste-Rohrförmige-Führung-Bereich (60) einen ersten Krümmungsradius (62) entlang einer Längsachse (63) der rohrförmigen Führung aufweist, und
wobei der zweite Erste-Rohrförmige-Führung-Bereich (61) einen zweiten Krümmungsradius (64) entlang der Längsachse (63) der rohrförmigen Führung aufweist, wobei der zweite Krümmungsradius (64) kleiner als der erste Krümmungsradius (62) ist, wobei sich der erste Krümmungsradius (62) und der zweite Krümmungsradius (64) von dem inneren Durchgang (9) nach außen krümmen.

2. Koppler nach Anspruch 1, der weiterhin eine zweite rohrförmige Führung (67) umfasst, die mit dem zweiten Leitungsende (5) gekoppelt ist, wobei sich die zweite rohrförmige Führung (67) kontinuierlich zwischen dem zweiten Leitungsende (5) und einem zweiten Rohrförmige-Führung-Terminalende (68) erweitert, wobei die zweite rohrförmige Führung umfasst:
einen ersten Zweite-Rohrförmige-Führung-Bereich (69), der direkt mit dem zweiten Leitungsende (5) verbunden ist,
einen zweiten Zweite-Rohrförmige-Führung-Bereich (72), der direkt mit dem ersten Zweite-Rohrförmige-Führung-Bereich (69) verbunden ist und sich zu dem zweiten Rohrförmige-Führung-Terminalende (68) erstreckt,
wobei der erste Zweite-Rohrförmige-Führung-Bereich (69) einen dritten Krümmungsradius (70) entlang einer Längsachse (71) der zweiten rohrförmigen Führung (67) aufweist, und
wobei der zweite Zweite-Rohrförmige-Führung-Bereich (72) einen vierten Krümmungsradius (73) entlang der Längsachse (71) der zweiten rohrförmigen Führung (67) aufweist, wobei der vierte Krümmungsradius (73) kleiner als der dritte Krümmungsradius (70) ist, wobei sich der dritte Krümmungsradius (70) und der zweite Krümmungsradius (64) von dem inneren Durchgang (9) nach außen krümmen.

3. Koppler nach Anspruch 1 oder 2, der weiterhin eine äußere ringförmige Nut (10) umfasst, die entlang des Umfangs an der äußeren Fläche (7) der rohförmigen Leitung (2) angeordnet ist, wobei die ringförmige Nut (10) ein inneres ringförmiges Glied (11), das entlang des Umfangs an der Innenfläche (8) der rohrförmigen Leitung (2) angeordnet ist, überlagert.

4. Koppler nach Anspruch 3, der weiterhin umfasst:
eine Vielzahl von äußeren ringförmigen Gliedern (12), die entlang des Umfangs an der Außenfläche (7) angeordnet sind und eine entsprechende Vielzahl von inneren ringförmigen Nuten (13), die entlang des Umfangs an der Innenfläche (8) der rohrförmigen Leitung (2) angeordnet sind, überlagern, wobei die Vielzahl von äußeren ringförmigen Gliedern (12) ein erstes äußeres ringförmiges Glied (16), ein zweites äußeres ringförmiges Glied (17), ein drittes äußeres ringförmiges Glied (37) und ein viertes äußeres ringförmiges Glied (39), die jeweils eine aus der Vielzahl von inneren ringförmigen Gliedern überlagern, umfassen und wobei die Vielzahl von inneren ringförmigen Nuten eine erste innere ringförmige Nut (18), eine zweite innere ringförmige Nut (19), eine dritte innere ringförmige Nut (38) und eine vierte innere ringförmige Nut (40) umfassen,
wobei die ersten und zweiten äußeren ringförmigen Glieder (16, 17) entsprechend die ersten und zweiten ringförmigen Nuten (18, 19), die in einer axial beabstandeten Beziehung an der Außenoberfläche (7) der rohrförmigen Leitung (2) in Nachbarschaft zu dem ersten Ende (4) angeordnet sind, überlagern, wobei das erste äußere ringförmige Glied (16), das die erste innere ringförmige Nut (18) überlagert, mit einem kleineren Abstand von dem ersten Ende (4) angeordnet ist als das zweite äußere ringförmige Glied (17), das die zweite innere ringförmige Nut (19) überlagert, und
die dritten und vierten äußeren ringförmigen Glieder (37, 39), die die dritten und vierten ringförmigen Nuten (38, 40) überlagern, mit einer axial beabstandeten Beziehung auf der Außenfläche (7) der rohrförmigen Leitung (2) in Nachbarschaft zu dem zweiten Ende (5) angeordnet sind, wobei das dritte äußere ringförmige Glied (37), das die dritte innere ringförmige Nut (38) überlagert, mit einem kleineren Abstand von dem zweiten Ende (5) angeordnet ist als das vierte äußere ringförmige Glied (39), das die vierte innere ringförmige Nut (40) überlagert.

5. Koppler nach Anspruch 4, das weiterhin ein erstes Dichtungselement (51) umfasst, das in der ersten inneren ringförmigen Nut (18) angeordnet ist, wobei sich ein Teil des ersten Dichtungselements (51) außerhalb der Innenfläche (8) in den inneren Durchgang (9) erstreckt.

6. Koppler nach Anspruch 5, der weiterhin ein zweites Dichtungselement umfasst, das in der dritten inneren ringförmigen Nut (38) angeordnet ist, wobei sich ein Teil des zweiten Dichtungselements außerhalb der Innenfläche (8) in den inneren Durchgang (9) erstreckt.

7. Koppler nach Anspruch 6, der weiterhin ein erstes ringförmiges Halteglied (52) mit einem Außenumfang (53) und einem Innenumfang (54) umfasst, wobei der Innenumfang (54) eine Vielzahl von sich radial erstreckenden Schlitzen in einer entlang des Umfangs beabstandeten Beziehung um den Innenumfang (52) herum aufweist, die eine Vielzahl von elastisch flexiblen Laschen (55) definieren, wobei der Außenumfang (53) in der zweiten inneren ringförmigen Nut (19) angeordnet ist.

8. Koppler nach Anspruch 7, der weiterhin ein zweites ringförmiges Halteglied (52) mit einem Außenumfang (53) und einem Innenumfang (54) umfasst, wobei der Innenumfang (54) eine Vielzahl von sich radial erstreckenden Schlitzen in einer entlang des Umfangs beabstandeten Beziehung um den Innenumfang (57) herum aufweist, die eine Vielzahl von elastisch flexiblen Laschen (55) definieren, wobei der Außenumfang (53) in der vierten inneren ringförmigen Nut (19) angeordnet ist.

9. Koppler nach Anspruch 8, wobei sich die Innenfläche (8) der rohrförmigen Leitung (2) zu dem ersten äußeren ringförmigen Glied (16) hin verjüngt.

10. Koppler nach Anspruch 9, wobei sich die Innenfläche (8) der rohrförmigen Leitung (2) zu dem dritten äußeren ringförmigen Glied (37) hin verjüngt.

11. Koppler nach Anspruch 10, wobei das erste äußere ringförmige Glied (16), das zweite äußere ringförmige Glied (17), das dritte äußere ringförmige Glied (37) und das vierte äußere ringförmige Glied (39) jeweils eine Krone (20, 41) umfassen, die zwischen einem Paar von Seiten (21), die sich zu der Außenfläche (7) der rohrförmigen Leitung (2) hin verjüngen, umfassen, wobei die Krone (20, 41) und die innere ringförmige Nut (18, 19, 38, 40) eine im Wesentlichen gleiche Breite aufweisen, wobei die Krone (20, 41) eine Höhe (24) zwischen dem ungefähr 1,0-fachen und ungefähr 2,0-fachen der Tiefe (25) der inneren ringförmigen Nut (18, 19, 38, 40) aufweist.

12. Koppler nach Anspruch 11, wobei die rohrförmige Leitung (2) eine allgemein zylindrische Innenfläche (8) aufweist.

13. Koppler nach Anspruch 12, wobei das Material der rohrförmigen Leitung (2) aus der Gruppe ausgewählt ist, die Metall, Kupfer, Beton, Polyvinylchlorid, Acrylonitrilbutadienstyrol, Polyethylen und Kombinationen aus diesen umfasst.

14. Koppler nach Anspruch 5, wobei das Dichtungselement (51) ein Material umfasst, das aus der Gruppe ausgewählt ist, die Ethylen-Propylen-Dien-Monomer, Silikon, Fluorkohlenstoff, Fluorsilikon, Polyurethan, Tetrafluorethylen/-propylen, Nitril und Neopren oder Kombinationen aus diesen umfasst.

15. Koppler nach Anspruch 3, wobei die äußere ringförmige Nut (10), die ein inneres ringförmiges Glied (11) überlagert, mittig an der rohrförmigen Leitung (2) angeordnet ist.

## Revendications

1. Coupleur (1), comprenant :
un conduit tubulaire (2) ayant une longueur (3) disposée entre une première extrémité (4) de conduit et une deuxième extrémité (5) de conduit et une paroi de conduit ayant une épaisseur (6) disposée entre une surface extérieure (7) et une surface intérieure (8), ladite surface intérieure définissant un passage intérieur (9) entre ladite première extrémité (4) de conduit et ladite deuxième extrémité (5) de conduit ; et
un guide tubulaire (56) couplé à ladite première extrémité (4) de conduit, ledit guide tubulaire (56) s'élargissant continuellement entre la première extrémité (4) de conduit et une extrémité terminale (58) de guide tubulaire, ledit guide tubulaire (56) comprenant :
une première région (60) de premier guide tubulaire directement reliée à ladite première extrémité (4) de conduit ;
une deuxième région (61) de premier guide tubulaire directement reliée à ladite première région (60) de premier guide tubulaire et s'étendant jusqu'à ladite extrémité terminale (58) de guide tubulaire ;
ladite première région (60) de premier guide tubulaire présentant un premier rayon de courbure (62) le long d'un axe longitudinal (63) dudit guide tubulaire ;
ladite deuxième région (61) de premier guide tubulaire présentant un deuxième rayon de courbure (64) le long dudit axe longitudinal (63) dudit guide tubulaire, ledit deuxième rayon de courbure (64) étant inférieur audit premier rayon de courbure (62), ledit premier rayon de courbure (62) et ledit deuxième rayon de courbure (64) s'incurvant vers l'extérieur à partir dudit passage intérieur (9).

2. Coupleur selon la revendication (1), comprenant en outre un deuxième guide tubulaire (67) couplé à ladite deuxième extrémité (5) de conduit, ledit deuxième guide tubulaire (67) s'élargissant continuellement entre ladite deuxième extrémité (5) de conduit et une deuxième extrémité terminale (68) de deuxième guide tubulaire, ledit deuxième guide tubulaire comprenant :
une première région (69) de deuxième guide tubulaire directement reliée à ladite deuxième extrémité (5) de conduit ;
une deuxième région (72) de deuxième guide tubulaire directement reliée à ladite première région (69) de deuxième guide tubulaire et s'étendant jusqu'à ladite extrémité terminale (68) de deuxième guide tubulaire ;
ladite première région (69) de deuxième guide tubulaire présentant un troisième rayon de courbure (70) le long d'un axe longitudinal (71) dudit deuxième guide tubulaire (67) ;
ladite deuxième région (72) de deuxième guide tubulaire présentant un quatrième rayon de courbure (73) le long dudit axe longitudinal (71) dudit deuxième guide tubulaire (67), ledit quatrième rayon de courbure (73) étant inférieur audit troisième rayon de courbure (70), ledit troisième rayon de courbure (70) et ledit deuxième rayon de courbure (64) s'incurvant vers l'extérieur à partir dudit passage intérieur (9).

3. Coupleur selon la revendication 1 ou 2, comprenant en outre une rainure annulaire (10) extérieure disposée circonférentiellement sur ladite surface extérieure (7) dudit conduit tubulaire (2), ladite rainure annulaire (10) se superposant à un élément annulaire (11) intérieur disposé circonférentiellement sur ladite surface intérieure (8) dudit conduit tubulaire (2).

4. Coupleur selon la revendication 3, comprenant en outre :
une pluralité d'éléments annulaires (12) extérieurs disposés circonférentiellement sur ladite surface extérieure (7) se superposant à une pluralité correspondante de rainures annulaires intérieures (13) disposées circonférentiellement sur ladite surface intérieure (8) dudit conduit tubulaire (2), ladite pluralité d'éléments annulaires extérieurs (12) comprenant un premier élément annulaire extérieur (16), un deuxième élément annulaire extérieur (17), un troisième élément annulaire extérieur (37) et un quatrième élément annulaire extérieur (39), chacun se superposant de manière correspondante à l'une de ladite pluralité de rainures annulaires intérieures, et dans lequel ladite pluralité de rainures annulaires intérieures comprend une première rainure annulaire intérieure (18), une deuxième rainure annulaire intérieure (19), une troisième rainure annulaire intérieure (38) et une quatrième rainure annulaire intérieure (40) ;
lesdits premier et deuxième éléments annulaires extérieurs (16, 17) se superposant de manière correspondante auxdites première et deuxième rainures annulaires (18, 19) disposées en relation axiale espacée sur ladite surface extérieure (7) dudit conduit tubulaire (2) à proximité de ladite première extrémité (4), ledit premier élément annulaire extérieur (16) se superposant à ladite première rainure annulaire intérieure (18) disposée à une plus courte distance de ladite première extrémité (4) que ledit deuxième élément annulaire extérieur (17) se superposant à ladite deuxième rainure annulaire intérieure (19) ; et
lesdits troisième et quatrième éléments annulaires extérieurs (37, 39) se superposant auxdites troisième et quatrième rainures annulaires (38, 40) disposées en relation axiale espacée sur ladite surface extérieure (7) dudit conduit tubulaire (2) à proximité de ladite deuxième extrémité (5), ledit troisième élément annulaire extérieur (37) se superposant à ladite troisième rainure annulaire intérieure (38) disposée à une plus courte distance de ladite deuxième extrémité (5) que ledit quatrième élément annulaire extérieur (39) se superposant à ladite quatrième rainure annulaire intérieure (40).

5. Coupleur selon la revendication 4, comprenant en outre un premier élément d'étanchéité (51) disposé dans ladite première rainure annulaire intérieure (18), une partie dudit premier élément d'étanchéité (51) s'étendant vers l'extérieur de ladite surface intérieure (8) dans ledit passage intérieur (9).

6. Coupleur selon la revendication 5, comprenant en outre un deuxième élément d'étanchéité disposé dans ladite troisième rainure annulaire intérieure (38), une partie dudit deuxième élément d'étanchéité s'étendant vers l'extérieur de ladite surface intérieure (8) dans ledit passage intérieur (9).

7. Coupleur selon la revendication 6, comprenant en outre un premier élément de retenue annulaire (52) ayant une périphérie extérieure (53) et une périphérie intérieure (54), ladite périphérie intérieure (54) ayant une pluralité de fentes s'étendant radialement en relation circonférentiellement espacée autour de ladite périphérie intérieure (52) définissant une pluralité de languettes (55) élastiquement flexibles, ladite périphérie extérieure (53) étant disposée dans ladite deuxième rainure annulaire intérieure (19).

8. Coupleur selon la revendication 7, comprenant en outre un deuxième élément de retenue annulaire (52) ayant une périphérie extérieure (53) et une périphérie intérieure (54), ladite périphérie intérieure (54) ayant une pluralité de fentes s'étendant radialement en relation circonférentiellement espacée autour de ladite périphérie intérieure (57) définissant une pluralité de languettes (55) élastiquement flexibles, ladite périphérie extérieure (53) étant disposée dans ladite quatrième rainure annulaire intérieure (19).

9. Coupleur selon la revendication 8, dans lequel ladite surface intérieure (8) dudit conduit tubulaire (2) se rétrécit à l'approche dudit premier élément annulaire extérieur (16).

10. Coupleur selon la revendication 9, dans lequel ladite surface intérieure (8) dudit conduit tubulaire (2) se rétrécit à l'approche dudit troisième élément annulaire extérieur (37).

11. Coupleur selon la revendication 10, dans lequel ledit premier élément annulaire extérieur (16), ledit deuxième élément annulaire extérieur (17), ledit troisième élément annulaire extérieur (37) et ledit quatrième élément annulaire extérieur (39) comprennent chacun une couronne (20, 41) disposée entre une paire de côtés (21) qui s'effilent vers ladite surface extérieure (7) dudit conduit tubulaire (2), chacune desdites couronnes (20, 41) et chacune desdites rainures annulaires intérieures (18, 19, 38, 40) ayant une largeur sensiblement égale, chacune desdites couronnes (20, 41) ayant une hauteur (24) comprise entre environ 1,0 fois et 2,0 fois environ une profondeur (25) de ladite rainure annulaire intérieure (18, 19, 38, 40).

12. Coupleur selon la revendication 11, dans lequel ledit conduit tubulaire (2) a une surface intérieure (8) généralement cylindrique.

13. Coupleur selon la revendication 12, dans lequel ledit matériau constituant ledit conduit tubulaire (2) est choisi dans le groupe constitué par : un métal, le cuivre, le béton, le polychlorure de polyvinyle, l'acrylonitrile-butadiène-styrène, le polyéthylène et des combinaisons de ceux-ci.

14. Coupleur selon la revendication 5, dans lequel ledit élément d'étanchéité (51) comprend un matériau choisi dans le groupe constitué par : monomère d'éthylène propylène diénique, silicone, fluorocarbure, fluorosilicone, polyuréthane, tétrafluoroéthylène/propylène, nitrile et néoprène, ou des combinaisons de ceux-ci.

15. Coupleur selon la revendication 3, dans lequel ladite rainure annulaire extérieure (10) se superpose à un élément annulaire intérieur (11) disposé médialement sur ledit conduit tubulaire (2).
